# EUROPÄISCHE PATENTSCHRIFT

(11) **EP 4 077 172 B1**
(45) Veröffentlichungstag und Bekanntmachung des Hinweises auf die Patenterteilung: **01.05.2024**
(21) Anmeldenummer: 20821134.2
(22) Anmeldetag: 30.11.2020
(51) Int. Cl.: B65G 15/10, B08B 9/20, B65G 23/06, B65G 39/09

(54) **VORRICHTUNG ZUR BEHANDLUNG VON BEHÄLTERN UND EIN VERFAHREN ZUM AUSTAUSCHEN VON LAGERSTELLEN AN BEHÄLTERBEHANDLUNGSVORRICHTUNGEN**
DEVICE FOR HANDLING CONTAINERS AND A METHOD FOR EXCHANGING MOUNTING POINTS ON CONTAINER-HANDLING DEVICES
DISPOSITIF DE MANIPULATION DE CONTENEURS ET PROCÉDÉ D'ÉCHANGE DE POINTS DE MONTAGE SUR DES DISPOSITIFS DE MANIPULATION DE CONTENEURS

(30) Priorität: 19.12.2019 DE 102019135162
(43) Veröffentlichungstag der Anmeldung: 26.10.2022
(73) Patentinhaber: KHS GmbH, 44143 Dortmund (DE)
(72) Erfinder: SCHWEDE, Norbert, 59379 Selm (DE); MEWIßEN, Florian, 45257 Essen (DE)
(86) Internationale Anmeldenummer: PCT/EP2020/083850
(87) Internationale Veröffentlichungsnummer: WO 2021/121918

(56) Entgegenhaltungen:
- JP-U- S5 676 628
- US-A- 3 346 094
- US-A- 5 037 356
- US-A1- 2017 251 603

## Beschreibung

Die Erfindung betrifft eine Vorrichtung zur Behandlung von Behältern gemäß dem Oberbegriff des Anspruchs 1 und ein Verfahren zum Austauschen von Lagerstellen an Behälterbehandlungsvorrichtungen gemäß dem Oberbegriff des Anspruchs 12.

Im Bereich von Behälterbehandlungsvorrichtungen, insbesondere beim Übergang von einem drängenden Behältertransport in einen gassenweisen Behältertransport, wie beispielsweise beim Einlauf an einer Behälterreinigungsmaschinen, sind Zuführungsbereiche mit einer Vielzahl paralleler Zulaufbänder, auf denen Behälter, insbesondere Flaschen, stehend befördert werden, bekannt. Jedes der Zulaufbänder wird üblicherweise mittels eines Treibrades angetrieben. Die Treibräder sind auf einer gemeinsamen, motorisch angetriebenen Welle angeordnet, sodass alle Zulaufbänder üblicherweise synchron bewegt werden.

Die Welle weist neben äußeren Lagerstellen auch zwischen den äußeren Lagerstellen angeordnete mittige Lagerstellen auf, die ein Durchhängen der Welle zwischen den äußeren Lagerstellen verhindern. Die mittigen Lagerstellen sind als separate Gleitlager ausgebildet, die über einen Tragarm mit einem Bauteil der Vorrichtung verbunden sind und sich hierüber abstützen. Die mittleren Lagerstellen sind nicht als Treibräder ausgebildet.

Die Gleitlager weisen üblicherweise korrodierende Lagerteile auf, was gerade im Bereich von Getränkebehandlungsvorrichtungen zu großen Schwierigkeiten führt. Auch sind die Standzeiten der Gleitlager üblicherweise deutlich kürzer als die Standzeiten der Treibräder, sodass die separaten Gleitlager zumeist deutlich früher ausgewechselt werden müssen als die Treibräder. Aufgrund einer formschlüssigen Verbindung sowohl der Treibräder als auch der Lagerräder mit den Gleitlagern mit der Welle ist ein Austausch der Gleitlager und der Treibräder immer mit einem hohen Aufwand verbunden. Auch ist gerade im Bereich der Lebensmittelindustrie die vorgeschriebene Reinigung der separaten Gleitlager schwierig.

Aus der US 3 346 094 A ist bereits eine Behälter-Eingabevorrichtung gemäß dem Oberbegriff des Anspruchs 1 zum Beschicken eines ansteigenden Stranges einer mit Taschen ausgerüsteten Förderanlage bekannt. Dabei weist die Behälter-Eingabevorrichtung eine im Abstand von der Förderanlage angeordnete umlaufende Behälter-Überführungstrommel sowie eine zwischen der Überführungstrommel und der Förderanlage angeordnete, leer-laufende Scheibenanordnung auf, mit über die Überführungstrommel und die Scheibenanordnung laufenden endlosen flexiblen Förderern zur Überführung von Behältern zur Förderanlage. An der der Förderanlage gegenüberliegenden Seite neben der Überführungstrommel ist weiterhin eine

Behälter-Zufuhreinrichtung angeordnet. Zudem sind zwischen ringförmigen Führungen der Trommel sich bewegende, über diese Führungen hinausragende Finger zum Erfassen aufeinanderfolgender Behälter von der Behälter-Zufuhreinrichtung und zur Überführung derselben zur Förderanlage vorgesehen.

Der Erfindung liegt die Aufgabe zugrunde, eine Behälterbehandlungsvorrichtung der vorgenannten Art bereitzustellen, die besonders einfach zu reinigende Lagerstellen im Bereich der Zulaufbänder aufweist, die verbesserte Standzeiten aufweisen und besonders einfach austauschbar sind. Weiter liegt der Erfindung die Aufgabe zugrunde, ein besonders einfaches Verfahren zum Austauschen von Lagerstellen an Behälterbehandlungsvorrichtungen vorzuschlagen.

Die Erfindung löst die Aufgabe durch eine Vorrichtung zur Behandlung von Behältern mit den Merkmalen des Anspruchs 1 und durch ein Verfahren zum Austauschen von Lagerstellen an Behälterbehandlungsvorrichtungen mit den Merkmalen des Anspruchs 12. Vorteilhafte Weiterbildungen der Erfindung sind in den abhängigen Ansprüchen angegeben.

Erfindungsgemäß weist die Vorrichtung zur Behandlung von Behältern einen Zuführungsbereich mit einer Vielzahl paralleler Zulaufbänder, auf welchen Behälter stehend gefördert werden, und einen gemeinsamen Antrieb der Zulaufbänder, der eine Welle und einen die Welle antreibenden Motor umfasst, auf, wobei jedes Zulaufband von mindestens einem Treibrad angetrieben wird, das formschlüssig mit der Welle verbunden ist und von dieser angetrieben wird, wobei mindestens eine zur Lagerung der Welle ausgebildete Lagerstelle angeordnet ist, die ein angetriebenes Lagerrad mit einer Wellenaufnahme und einer Lageraufnahme aufweist, wobei ein zum Abstützen der Welle vorgesehener Lagerbock mit einem Lagersitz an dem eine äußere Kontaktfläche angeordnet ist, und an der Kontaktfläche eine Anlagefläche der Lageraufnahme drehbeweglich gelagert ist und das angetriebene Lagerrad als ein in mindestens zwei Teile zerlegbares geteiltes Lagerrad ausgebildet ist.

Ein Kernelement der Erfindung ist, dass eine Lagerstelle bereitgestellt wird, die sowohl als angetriebenes Antriebsrad für das Zulaufband als auch als Stützrad für die Welle ausgebildet ist. Das angetriebene Lagerrad ist somit letztlich ein Treibrad mit einer Stützfunktion für die Welle. Mittels der erfinderischen Ausbildung wird zwischen dem Lagerbock und Lagerrad ein direktes Gleitlager ausgebildet, das die bekannte Konstruktion mit separatem Gleitlager ersetzt. Diese einfache Konstruktion ist besonders leicht zu reinigen, so dass auch die hohen Anforderungen im Bereich der Lebensmittelindustrie einfach erfüllt werden können. Aufgrund der direkten Anordnung des angetriebenen Lagerrads am Lagerbock ist die Lagerstelle zudem deutlich unempfindlicher gegenüber Korrosionsschäden. Auch liegt überraschenderweise eine deutlich erhöhte Verschleißfestigkeit vor.

Ein weiteres Kernelement ist die Ausbildung des angetriebenen Lagerrades als geteiltes Lagerrad, wodurch eine einfache Montage und Demontage des einzelnen angetriebenen Lagerrades durchgeführt werden kann, ohne die gesamte Lagerstelle und den gesamten Antriebsbereich mit der Welle demontieren zu müssen. Selbstverständlich können mehrere angetriebene Lagerräder an einer Welle angeordnet sein.

Die besonders einfache, konstruktive Ausbildung des angetriebenen Lagerrades ermöglicht zudem eine einfache Nachrüstbarkeit von bereits bestehenden Vorrichtungen zur Behälterbehandlung.

Unter einem geteilten Lagerrad wird ein angetriebenes Lagerrad verstanden, das in mindestens zwei einzelne Teile zerlegbar ist. Dabei ist jedes einzelne Teil im Querschnitt kreisbogenabschnittsförmig ausgebildet. Die einzelnen Teile des Lagerrads sind vorzugsweise identisch ausgebildet und können über Befestigungsmittel miteinander zu dem angetriebenen Lagerrad verbunden werden.

Das angetriebene teilbare Lagerrad ist üblicherweise kreisrund. Bei einem beispielsweise zweiteilig ausgebildeten angetriebene Lagerrad kann jedes Teil des Lagerrades vorzugsweise im Querschnitt eine halbkreisförmige Form aufweisen.

Unter der Wellenaufnahme ist ein Abschnitt des Lagerrades zu verstehen, an dem die Welle mit dem Lagerrad formschlüssig in Kontakt ist und über die die Drehbewegung der Welle auf das Lagerrad übertragen wird.

Die Lageraufnahme ist ein weiterer Abschnitt an dem Lagerrad der zum Anordnen des Lagerbocks vorgesehen ist. Unter dem Lagerbock wird eine Stützvorrichtung verstanden, die mit einem ersten Abschnitt an einem Bauteil der Vorrichtung befestigt ist und an einem zweiten Abschnitt zum drehbeweglichen Anordnen der Lageraufnahme vorgesehen ist. Die beiden Abschnitte des Lagerbocks sind unbeweglich zueinander miteinander verbunden, beispielsweise auch als einstückiges Bauteil ausgebildet.

Unter der äußeren Kontaktfläche wird eine Oberfläche des Lagerbocks bzw. dessen Lagersitzes verstanden, an dem die Anlagefläche anliegt, sodass das Lagerrad um die Kontaktfläche drehbar beweglich ist. Wie bereits ausgeführt bilden Anlagefläche und Kontaktfläche ein Gleitlager aus. Zwischen der Anlagefläche und dem Gleitlager kann auch eine Schmiermittelschicht vorliegen. Das Zusammenwirken von Kontaktfläche und Anlagefläche kann in Form eines Gleitlagers oder als Wälz- oder Kugellager ausgebildet sein.

Die Lagerräder können als Rädern mit für Treibräder bekannten Oberfläche ausgebildet sein, sind vorzugsweise jedoch als Zahnräder ausgebildet, die in eine korrespondierende Verzahnung an den Zulaufbändern eingreifen und diese antreiben. Dementsprechend werden unter Zulaufbändern zum einen Bänder wie Gurte und Ähnliches verstanden, zum anderen können unter den Zulaufbändern aber auch entsprechend ausgebildete Transportketten verstanden werden.

Die Behälter sind insbesondere zum Aufnehmen von Flüssigkeiten wie beispielsweise Getränke ausgebildet. Dementsprechend können die Behälter insbesondere als Flaschen oder Dosen für Getränke ausgebildet sein. Dabei findet die erfindungsgemäße Vorrichtung insbesondere bei dem Transport von Getränkeflaschen Anwendung.

Die Vorrichtung zur Behandlung von Behältern kann in unterschiedlichen Abschnitten einer Vorrichtung zur Herstellung, Vorbereitung oder auch Befüllung von Behältern eingesetzt werden. Insbesondere ist die Vorrichtung dazu ausgebildet, im Bereich der Behälterreinigung, bspw. der Flaschenreinigung, eingesetzt zu werden, so dass es sich bei der erfindungsgemäßen Vorrichtung insbesondere um eine Vorrichtung zur Behälterreinigung handelt.

Unter dem Zuführungsbereich wird insbesondere ein Abschnitt einer Transportvorrichtung der Behälterbehandlungsvorrichtung verstanden, in dem die Behälter von einem drängenden Behälterstrom (Massenstrom) kommend aufgeteilt auf eine Vielzahl paralleler Zulaufbänder in eine entsprechende Behälterbehandlungsstation eingefahren werden. Diese Zulaufbänder sind in der Regel durch Trennelemente in Gassen aufteilt, in denen die Behälter in Reihe hintereinander stehend gefördert werden.

Bei der stehenden Förderung stehen die Behälter mit ihrem Behälterboden auf dem Zulaufband auf und werden von dem Zulaufband transportiert. Zur Verhinderung eines Umkippens können beispielsweise seitliche Führungsgeländer oder auch Führungsvorrichtungen im Kopfbereich des Behälters angeordnet sein.

Der gemeinsame Antrieb umfasst zudem einen mit der Welle gekoppelten Motor, der insbesondere als Elektromotor ausgebildet ist und die Welle antreibt.

Besonders zur Verbesserung und Erleichterung der Auswechselbarkeit des geteilten Lagerrades ist nach einer Weiterbildung der Erfindung vorgesehen, dass das geteilte, angetriebene Lagerrad in mindestens drei, insbesondere identische Teile zerlegbar ist. Dabei ist jedes Teil im Querschnitt kreisbogenförmig ausgebildet, sodass die zusammengesetzten einzelnen Teile einen Vollkreis ergeben. Die einzelnen Teile sind über Befestigungsmittel miteinander verbunden. Hierfür können insbesondere Schraubverbindungen eingesetzt werden, die jeweils zwei Abschnitte miteinander verbinden. Alternativ oder ergänzend können die einzelnen Teile beispielsweise auch über Rastverbindungen miteinander verbunden sein und ggf. zum exakten Positionieren der einzelnen Teile aneinander Fixierungsstifte aufweisen. Die Aufteilung des Lagerrades in bspw. drei oder vier Teile kann die Montage und Demontage des Lagerrades deutlich vereinfachen.

Um im Falle einer Ausbildung als Gleitlager die Standzeit der angetriebenen Lagerräder zu erhöhen, sind nach einer Weiterbildung der Erfindung die Anlagefläche oder die Kontaktfläche aus Kunststoff und die jeweils andere Anlagefläche oder Kontaktfläche aus Metall ausgebildet. D. h., dass entweder die Anlagefläche aus Kunststoff und die Kontaktfläche aus Metall oder die Anlagefläche aus Metall und die Kontaktfläche aus Kunststoff ist. Diese bevorzugte Werkstoffpaarung erhöht die Korrosionsbeständigkeit der Lagerstelle, sodass die Standzeit der Lagerstelle mit dem angetriebenen Lagerrad der Standzeit eines Treibrades angeglichen wird, wodurch die Wartung und der Austausch der Treibräder und Lagerräder zeitgleich erfolgen können. Eines solche vorteilhafte Werkstoffpaarung umfasst einen nicht rostenden Edelstahl, wie bspw. 1.4301 für die Lagerstelle und PE-UMHW für das Lagerrad, wobei PE-UHMW für ultrahochmolekulares HDPE mit einer mittleren Molmasse von bis zu 6000 kg/mol und einer Dichte von 0,93-0,94 g/cm³ steht.

Grundsätzlich ist es denkbar, das Lagerrad und die an der Lageraufnahme des Lagerrades ausgebildete Anlagefläche aus unterschiedlichen Bauteilen auszubilden und miteinander zu verbinden. Besonders bevorzugt sind das Lagerrad und die Anlagefläche jedoch einteilig ausgebildet. D. h., dass die Anlagefläche ein Oberflächenabschnitt des Lagerrades ist, insbesondere ein Oberflächenabschnitt im Bereich der Lageraufnahme. Insofern sind das Lagerrad und die Anlagefläche vorzugsweise aus dem gleichen Material ausgebildet, beispielsweise aus einem Kunststoff oder Metall.

Wie bereits ausgeführt ist die Wellenaufnahme ein Bauteilabschnitt am Lagerrad, der zur Aufnahme der Welle ausgebildet ist. Dabei ist die Wellenaufnahme auf die Querschnittsform der Welle angepasst, sodass das Lagerrad mit der Wellenaufnahme formschlüssig mit der Welle verbunden ist. Die Lageraufnahme ist ein weiterer Bauteilabschnitt am Lagerrad, der zur Aufnahme des Lagerbocks vorgesehen ist. Die Lageraufnahme kann hierfür beispielsweise als aus dem Lagerrad herausstehender Flansch ausgebildet sein, der an dem Lagerbock drehbeweglich gelagert ist. Besonders bevorzugt ist die Lageraufnahme jedoch als sich in Längsachsenrichtung der Welle erstreckende Sackbohrung im Lagerrad ausgebildet. D. h., die Lageraufnahme befindet sich im Inneren des Lagerrades. Diese konstruktive Ausgestaltung verhindert von sich aus bereits starke Verschmutzungen im Bereich der Lageraufnahme und des Lagerbocks. Zudem ist sie besonders einfach zu reinigen und sehr kompakt.

Nach einer Weiterbildung der Erfindung ist vorgesehen, dass die Wellenaufnahme und die Lageraufnahme in axiale Richtung des Lagerrades nebeneinander angeordnet sind. Hierdurch wird die einfache konstruktive Ausgestaltung konsequent fortgesetzt, sodass sowohl die Montierbarkeit als auch Demontierbarkeit genauso wie die Reinigbarkeit weiter verbessert wird. Die Lageraufnahme ist insbesondere als Bohrung im Lagerrad ausgebildet, wobei sich die Bohrung von einer Außenseite des Lagerrades beispielsweise in die Sackbohrung der Lageraufnahme erstreckt. Die Bohrung ist im Querschnitt an den Querschnitt der Welle angepasst, um eine formschlüssige Verbindung herzustellen. Welle und Wellenaufnahme können bspw. mehreckig, insbesondere sechseckig ausgebildet sein.

Der Durchmesser der Lageraufnahme, beispielsweise der Durchmesser der Sackbohrung, ist somit insbesondere größer als der Durchmesser der Wellenaufnahme. Unter der axialen Richtung des Lagerrades wird die Längsachsenrichtung der Welle verstanden.

Zum sicheren Positionieren des angetriebenen Lagerrades an der Welle in Längsachsenrichtung der Welle ist nach einer Weiterbildung der Erfindung vorgesehen, dass die Befestigung des angetriebenen Lagerrades an der Welle in Längsachsenrichtung mittels eines an der Welle lösbar befestigten Klemmringes und durch den in der Lageraufnahme angeordneten Lagerbock erfolgt. Hierfür kann der Lagerbock in Längsachsenrichtung mit einer Oberfläche der Lageraufnahme, beispielsweise einem Grund der Sackbohrung, in Kontakt sein, während der Klemmring an der dem Lagerbock gegenüberliegenden Seite des Lagerrades an der Welle lösbar befestigt ist. Das Lagerrad wird somit zwischen dem Klemmring und dem Lagerbock positioniert, beispielsweise eingespannt, so dass eine Verschiebung des Lagerrades in axialer Richtung verhindert wird.

Zur Verbesserung der Montier- und Demontierbarkeit ist nach einer Weiterbildung der Erfindung vorgesehen, dass der Lagerbock einen Lagersitz zur Anordnung an der Lageraufnahme und einen mit dem Lagersitz lösbar verbundenen Ständer aufweist, der an einem Bauteil der Vorrichtung montiert ist und den Lagersitz mit der Welle insbesondere quer zur Längsachsenrichtung abstützt.

Der Lagersitz umfasst die äußere Kontaktfläche beispielsweise eine Lagersitzes, an der die Anlagefläche der Lageraufnahme anliegt. Insofern unterliegt der Lagersitz mit der Kontaktfläche einem Verschleiß, wenn dieser Teil eines Gleitlagers ist, und muss wie auch die Lageraufnahme regelmäßig ausgewechselt werden. Aufgrund der lösbaren Ausbildung des Lagersitzes von dem Ständer ist das Auswechseln des Lagersitzes besonders einfach möglich.

Der Lagersitz weist insbesondere einen runden Querschnitt auf und ist vorzugsweise als Lagerring ausgebildet, an dessen Außenfläche die Lageraufnahme mit der Anlagefläche anliegt. Grundsätzlich kann zur Demontage des Lagersitzes dieser mitsamt dem Ständer demontiert bzw. ein neuer Lagersitz mit Ständer montiert werden. Vorzugsweise wird nur der Lagersitz ausgetauscht werden. Um den Austausch des Lagersitzes besonders einfach zu gestalten ist der Lagersitz ebenfalls mehrteilig ausgebildet und kann in mindestens zwei, gegebenenfalls auch mehrere Lagersitzteile zerlegt werden. Die Ausbildung kann analog zur Ausbildung des mehrteiligen Lagerrades erfolgen. Die einzelnen Lagersitzteile können somit beispielsweise auch einen kreisbogenförmigen Querschnitt aufweisen. Die einzelnen Teile werden ebenfalls über Verbindungsmittel, beispielsweise Schrauben, miteinander verbunden. Dabei sind die einzelnen, einen Lagersitz ausbildenden Teile vorzugsweise identisch ausgebildet.

Weiter wird die Erfindung gelöst durch ein Verfahren zum Austauschen von Lagerstellen an Behälterbehandlungsvorrichtungen mit einer Vielzahl paralleler Zulaufbänder, auf welchen die Behälter stehend gefördert werden und die einen gemeinsamen Antrieb der Zulaufbänder mittels einer Welle und einem die Welle antreibenden Motor umfasst, wobei jedes Zulaufband von mindestens einem Treibrad angetrieben wird, das formschlüssig mit der Welle verbunden und von dieser angetrieben wird, mit den Schritten: Demontage mindestens eines der Zulaufbänder, Lösen von Befestigungsmitteln zum Verbinden einzelner Teile eines angetriebenen Lagerrades, Entnahme mindestens eines ersten Teils und eines zweiten Teils des angetriebenen Lagerrades, Aufsetzen eines ersten Teils eines neuen angetriebenen Lagerrades auf die Welle und auf einen Lagerbock, Aufsetzen eines zweiten Teils des neuen angetriebenen Lagerrades auf die Welle und auf den Lagerbock, Verbinden der beiden Teile des neuen Lagerrades durch Befestigen der Befestigungsmittel.

Durch die Zerlegbarkeit des Lagerrades in einzelne Teile ist der Austausch eines Lagerrades besonders einfach durchführbar, da jedes auszutauschende Lagerrad einzeln, ohne eine vollständige Demontage der Welle oder der Antriebseinheit erfolgen kann.

Neben dem Lagerrad unterliegt auch der Lagerbock einem Verschleiß durch das sich um den Lagerbock drehende Lagerrad. Zur weiteren Erleichterung der Austauschbarkeit der Lagerstelle ist nach einer Weiterbildung der Erfindung vorgesehen, dass der Lagerbock einen Lagersitz zur Anordnung an der Lageraufnahme und einen mit dem Lagersitz lösbar verbundenen Ständer aufweist, der an einem Bauteil der Vorrichtung montiert ist, sodass vor dem Aufsetzen des ersten Teils des neuen angetriebenen Lagerrades der Lagersitz ausgewechselt wird. Dieser Bedarf ist nicht oder vergleichsweise selten gegeben, wenn der Lagersitz ein Wälz- oder Kugellager umfasst.

Die mindestens zweiteilige Ausbildung des Lagerbocks minimiert damit den Aufwand zum Austausch der Lagerstelle weiter, da der Ständer des Lagerbocks in seiner montierten Position am Bauteil bleiben kann.

Die mindestens zwei separaten Teile des Lagerbocks sind über Befestigungsmittel miteinander verbunden. Hierfür können beispielsweise Schrauben verwendet werden. Die Befestigungsmittel werden somit vor der Montage eines neuen Lagerrades gelöst und der abgenutzte Lagersitz wird vom Ständer entfernt und ein neuer Lagersitz mittels Befestigungsmittel an dem Ständer befestigt.

Der Lagersitz ist vorzugsweise im Querschnitt rund, bspw. ringförmig ausgebildet. Seine Außenfläche bildet vorzugsweise die Kontaktfläche des Lagerbocks.

Zur weiteren Verbesserung der Austauschbarkeit ist zudem besonders bevorzugt vorgesehen, dass der Lagersitz mehrteilig ausgebildet ist und durch ein Lösen von Befestigungsmitteln, die die einzelnen Teile verbinden, in mehrere Teile zerlegt bzw. aus mehreren Teilen zusammengesetzt wird. Hierdurch wird gewährleistet, dass auch der Lagersitz ohne eine weitere Demontage der Welle oder der Antriebseinheit ausgetauscht werden kann. Dabei kann der Lagersitz analog zum Lagerrad zweiteilig oder mindestens dreiteilig ausgebildet sein. Die ein Lagersitz bildenden Teile sind zudem vorzugsweise identisch ausgebildet.

Bei Aspekten, die im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Im Weiteren wird die Erfindung anhand eines Ausführungsbeispiels näher beschrieben. Es zeigen:
- Fig. 1: schematisch in einem Querschnitt einen Ausschnitt einer Behälterbehandlungsvorrichtung mit einem Zuführungsbereich, der eine Vielzahl paralleler Zulaufbänder aufweist;
- Fig. 2: schematisch in einem Querschnitt einen Ausschnitt aus einer Lagerstelle;
- Fig. 3a-3b: schematisch in zwei vertikalen Querschnitten und einem horizontalen Querschnitt ein Lagerrad aus Figur 1 und 2;
- Fig. 4a: schematisch in einer perspektivischen Darstellung den Lagerbock aus Figur 1 und 2;
- Fig. 4b: schematisch in einem Querschnitt den Lagerbock aus Figur 4a;
- Fig. 5: schematisch eine alternative Ausführungsform des Lagerbocks, bei dem der Lagersitz ein Wälz- oder Kugellager umfasst.

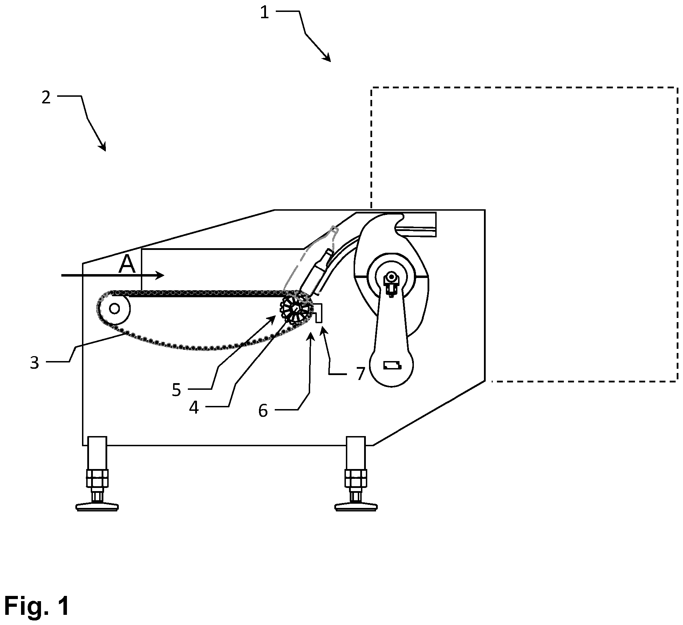

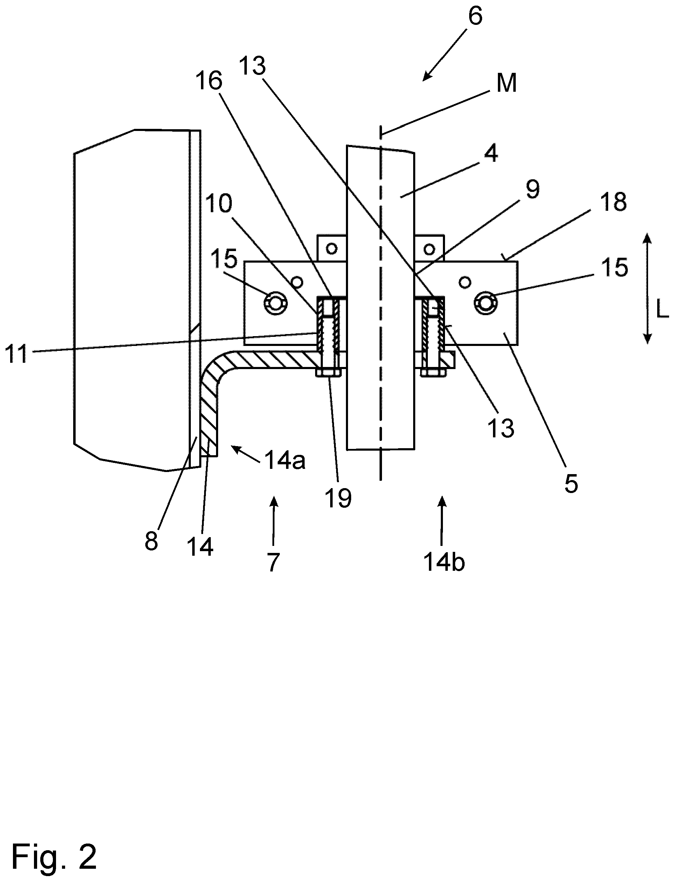

Figur 1 zeigt eine Vorrichtung 1 zur Behandlung von Behältern, beispielsweise Getränkebehältern wie Flaschen oder Dosen. Die Vorrichtung 1 weist einen Zuführungsbereich 2 mit einer Vielzahl paralleler Zulaufbänder 3 auf, die die Flaschen in Transportrichtung A in Richtung einer Einführungsvorrichtung fördern. Jedes Zulaufband 3 wird über ein Treibrad (hier nicht dargestellt) angetrieben, sodass alle Zulaufbänder 3 synchron bewegt werden. Die Treibräder sind formschlüssig auf der Welle 4 angeordnet und bewegen sich mit der Welle 4 mit. Für eine stabile Lagerung der Welle 4 quer zu ihrer Längsachsenrichtung L (siehe Figur 2) und um ein Durchhängen der Welle 4 quer zu ihrer Längsachsenrichtung L zu verhindern, sind zwischen zwei äußeren Lagerstellen (hier nicht dargestellt) mehrere Lagerstellen 6 (siehe Figur 2) angeordnet, die jeweils mindestens ein angetriebenes Lagerrad 5 aufweisen. Das Lagerrad 5 ist wie die Treibräder formschlüssig auf der Welle 4 angeordnet und wird von dieser angetrieben. Zusätzlich ist das Lagerrad 5 über einen Lagerbock 7 mit einem weiteren Bauteil 8 der Vorrichtung 1 derart verbunden, dass die Welle 4 über das Lagerrad 5 und den Lagerbock 7 an dem Bauteil 8 abgestützt wird.

Figur 2 zeigt schematisch in einem Querschnitt einen Ausschnitt aus einer Lagerstelle 6 mit einer Welle 4 und ihrer sich in Längsachsenrichtung L erstreckenden Mittelachse M, einem angetriebenen Lagerrad 5 und einem Lagerbock 7, der an dem weiteren Bauteil 8 der Vorrichtung 1 befestigt ist.

Das angetriebene Lagerrad 5 weist eine Wellenaufnahme 9 und eine Lageraufnahme 10 auf. Die Wellenaufnahme 9 und die Lageraufnahme 10 sind in Längsachsenrichtung L nebeneinander bzw. hintereinander angeordnet. Im Bereich der Wellenaufnahme 9 ist die Welle 4 formschlüssig an der Wellenaufnahme 9 angeordnet und überträgt ihre Drehung im Betrieb auf das Lagerrad 5. Das Lagerrad 5 ist aus Kunststoff ausgebildet.

Die Lageraufnahme 10 ist als Sackbohrung ausgebildet und somit innerhalb des Lagerrades 5 angeordnet. In der Lageraufnahme 10 ist der Lagerbock 7 hier mit einem Lagersitz 11 angeordnet. Im Bereich der Lageraufnahme 10 ist eine Anlagefläche 12 ausgebildet, die an einer Kontaktfläche 13 des Lagerbocks 7, hier des Lagersitzes 11, drehbeweglich gelagert ist. Die Kontaktfläche 13 des Lagersitzes 11 und die Anlagefläche 12 des Lagerrades 5 bilden ein Gleitlager aus. Die Anlagefläche 12 ist ein Oberflächenabschnitt des Lagerrades 5. Der Lagerbock ist aus Metall ausgebildet.

Für eine besonders einfache Montage und Demontage ist das Lagerrad 5 als geteiltes angetriebenes Lagerrad 5 ausgebildet. Das hier dargestellte Lagerrad 5 wird dabei aus zwei identischen Lagerradteilen 5a gebildet, die über Befestigungsmittel 15, hier einer Schraubverbindung, miteinander verbunden sind.

Zum Abstützen der Welle 4 weist der Lagerbock 4 einen Ständer 14 auf, der an einem ersten Abschnitt 14a mit dem Bauteil 8 und an einem zweiten Abschnitt 14b mit dem Lagersitz 11 verbunden ist. Der Lagersitz 11 ist über Befestigungsmittel 19, hier Schrauben, lösbar mit dem Ständer 14 verbunden.

Um eine axiale Verschiebung des Lagerrades 5 in Längsachsenrichtung L zu verhindern, ist das Lagerrad 5 zum einen in Längsachsenrichtung L mit einem Anlageabschnitt 16 mit dem Lagersitz 11 in Kontakt und zum anderen ist an einer dem Lagersitz 11 gegenüberliegenden Seite ein Klemmring 17 an einer Außenseite 18 des Lagerrades 5 angeordnet.

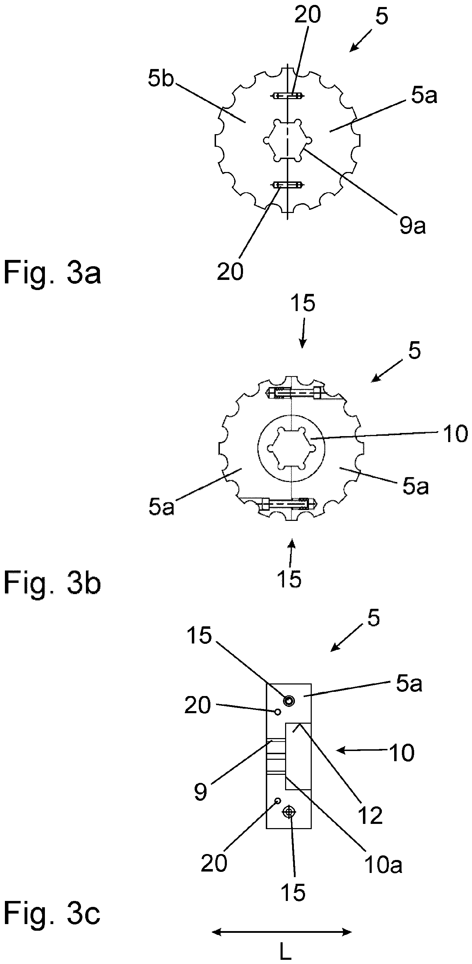

Figur 3a und 3b zeigen schematisch in vertikalen Querschnitten das Lagerrad 5 aus Figur 1 und 2. Dabei zeigt die Darstellung in Figur 3a das Lagerrad 5 im Bereich der Wellenaufnahme 9, während die Figur 3b das Lagerrad 5 im Bereich der Lageraufnahme 10 darstellt. Deutlich erkennbar ist, dass das Lagerrad 5 aus zwei Lagerradteilen 5a zusammengesetzt ist. Beide Lagerradteile 5a sind identisch ausgebildet und weisen jeweils einen halbkreisförmigen Querschnitt auf.

Die beiden Lagerradteile 5a sind über die Befestigungsmittel 15 miteinander verbunden, die hier als Schraubverbindung ausgebildet sind. Neben den Befestigungsmitteln 15 zum Verbinden der beiden Lagerradteile 5a sind Fixierungsstifte 20 angeordnet, die eine exakte Positionierung der beiden Lagerradteile 5a aneinander gewährleisten.

Figur 3c zeigt das Lagerrad 5 in einem horizontalen Querschnitt, exakt im Bereich der Anschlussverbindung der beiden Lagerradteile 5a.

Deutlich erkennbar ist die Lageraufnahme 10, die hier als Sackloch ausgebildet ist. Dabei ragt die Lageraufnahme 10 ins Innere des Lagerrades 5. Die parallel zur Längsachsenrichtung L ausgerichtete Oberfläche der Lageraufnahme (des Sackloches) bildet die Anlagefläche 12 aus.

Die Wellenaufnahme 9 ist als Bohrung ausgebildet und weist einen auf die Welle 4 angepassten, weitestgehend sechseckigen Querschnitt auf. Die Wellenaufnahme 9 ragt in den Grund 10a des Sackloches hinein.

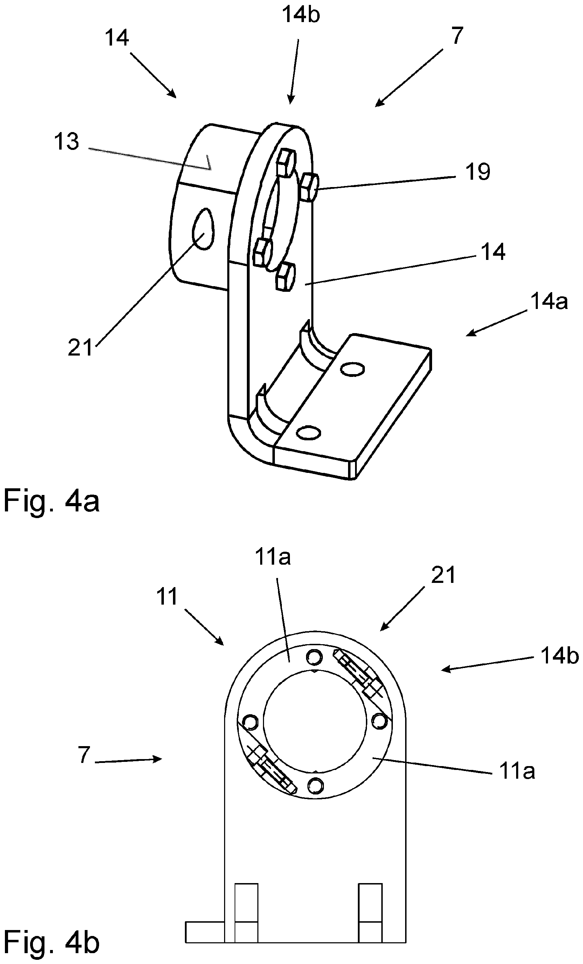

Figur 4a zeigt schematisch in einer perspektivischen Darstellung den Lagerbock 7 aus Figur 1 und 2, während Figur 4b den Lagerbock 7 schematisch in einem Querschnitt zeigt. Der Lagerbock 7 umfasst den Ständer 14 und den Lagersitz 11. Der Ständer 14 ist aus Metall, als gebogener Winkel ausgebildet und weist den ersten Abschnitt 14a auf, der zum Befestigen an einem Bauteil 8 ausgebildet ist. An dem zweiten Abschnitt 14b des Ständers 14 ist der Lagersitz 11 mittels der Befestigungsmittel 19, hier vier Schrauben, mit dem Ständer14 lösbar verbunden.

Wie aus Figur 4b deutlich zu erkennen, ist der Lagersitz 11 ringförmig ausgebildet. Zudem ist der Lagersitz 11 als geteilter Lagersitz 11 ausgebildet und umfasst zwei Lagersitzteile 11a, die jeweils eine halbringförmige Form aufweisen. Die beiden Lagersitzteile 11a sind über Befestigungsmittel 21, hier ebenfalls Schraubverbindungen, miteinander verbunden. Die kreisrunde Außenseite des Lagersitzes 11 bildet die Kontaktfläche 13 aus.

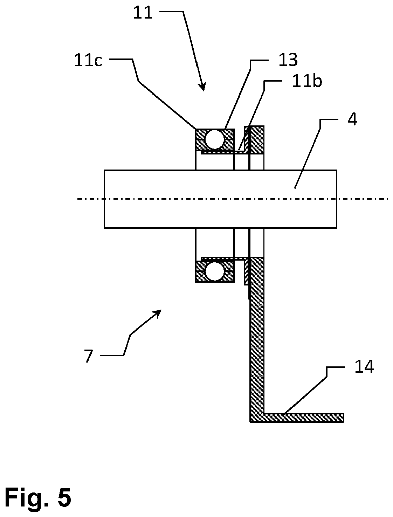

Alternativ ist in Figur 5 ein Lagerbock 7 dargestellt, der an dem am zweiten Abschnitt 14b angeordnete Lagersitz 11 ein ringförmiges Wälz- oder Kugellager 11c aufweist. Dieses Wälz- oder Kugellager 11c ist an einer Lagersitzhülse 11b festgelegt und getragen, so dass dessen innerer Teil fest mit dem Lagerbock 7 bzw. dessen zweitem Abschnitt 14b verbunden ist. Die Kontaktfläche 13 wird in diesem Ausführungsbeispiel von der drehbaren, äußeren Ringfläche des Wälz- oder Kugellager 11c gebildet, an der das Lagerrad 5 mit seiner Anlagefläche 12 anliegt (nicht dargestellt). Hierbei wird zwischen der Kontaktfläche 13 und der Anlagefläche 12 keine oder fast keine Relativbewegung im Betriebszustand erfolgt. Es versteht sich für den Fachmann, dass die Lagersitzhülse 11b nur beispielhaft genannt ist und jedes geeignete Trag- oder Befestigungsmittel für das Wälz- oder Kugellager 11c vorgesehen werden kann.

Die Welle 4 treibt analog zur Figur 2 das Lagerrad 5 über die Wellenaufnahme 9a an und steht nicht in direkten Kraft- oder Formschluss mit dem Wälz- oder Kugellager 11c.

Weiterhin sind alle sonstigen vorgenannten Ausführungsdetails der vorherigen Figuren 1 bis 4b für diese alternative Ausführungsform nach Figur 5 in analoger Weise anwendbar.

### Bezugszeichenliste

- 1: Vorrichtung
- 2: Zuführungsbereich
- 3: Zulaufbänder
- 4: Welle
- 5: Lagerrad
- 5a: Lagerradteil
- 6: Lagerstelle
- 7: Lagerbock
- 8: Bauteil
- 9: Wellenaufnahme
- 10: Lageraufnahme
- 10a: Grund
- 11: Lagersitz
- 11a: Lagersitzteil
- 11b: Lagersitzhülse
- 11c: Wälz- oder Kugellager
- 12: Anlagefläche
- 13: Kontaktfläche
- 14: Ständer
- 14a: erster Abschnitt
- 14b: zweiter Abschnitt
- 15: Befestigungsmittel
- 16: Anlageabschnitt
- 17: Klemmring
- 18: Außenseite
- 19: Befestigungsmittel
- 20: Fixierungsstifte
- 21: Befestigungsmittel

- A: Transportrichtung

## Patentansprüche

1. Vorrichtung zur Behandlung von Behältern, aufweisend
- einen Zuführungsbereich (2) mit einer Vielzahl paralleler Zulaufbänder (3), auf welchen Behälter stehend gefördert werden,
- einen gemeinsamen Antrieb der Zulaufbänder (3), der eine Welle (4) und einen die Welle (4) antreibenden Motor umfasst, wobei jedes Zulaufband (3) von mindestens einem Treibrad angetrieben wird, das formschlüssig mit der Welle (4) verbunden ist und von dieser angetrieben wird,
- mindestens eine zur Lagerung der Welle (4) ausgebildete Lagerstelle (6), die ein angetriebenes Lagerrad (5) mit einer Wellenaufnahme (9) und einer Lageraufnahme (10) aufweist,
**dadurch gekennzeichnet, dass**
- ein zum Abstützen der Welle (4) vorgesehener Lagerbock (7) mit einem Lagersitz (11), umfassend eine Kontaktfläche (13) vorgesehen ist, an welcher das Lagerrad (5) drehbeweglich gelagert ist, indem
- an der Kontaktfläche (13) eine Anlagefläche (12) der Lageraufnahme (10) drehbeweglich gelagert ist und
- das angetriebene Lagerrad (5) als ein in mindestens zwei Teile (5a) zerlegbares, geteiltes Lagerrad (5) ausgebildet ist.

2. Vorrichtung nach Anspruch 1,
**dadurch gekennzeichnet, dass** das geteilte Lagerrad (5) ein in mindestens drei Teile (5a) zerlegbares, geteiltes Lagerrad (5) ist.

3. Vorrichtung nach Anspruch 1 oder Anspruch 2,
**dadurch gekennzeichnet, dass** Einer von Anlagefläche (12) und Kontaktfläche (13) aus Kunststoff und der Andere von Anlagefläche (12) und Kontaktfläche (13) aus Metall ausgebildet sind.

4. Vorrichtung nach einem der vorhergehenden Ansprüche,
**dadurch gekennzeichnet, dass** das Lagerrad (5) und die Anlagefläche (12) einteilig ausgebildet sind.

5. Vorrichtung nach einem der vorhergehenden Ansprüche,
**dadurch gekennzeichnet, dass** die Lageraufnahme (10) als sich in eine Längsachsenrichtung (L) der Welle (4) erstreckende Sackbohrung ausgebildet ist.

6. Vorrichtung nach einem der vorhergehenden Ansprüche,
**dadurch gekennzeichnet, dass** die Wellenaufnahme (9) und die Lageraufnahme (10) in axiale Richtung des Lagerrades (5) nebeneinander angeordnet sind.

7. Vorrichtung nach einem der vorhergehenden Ansprüche,
**dadurch gekennzeichnet, dass** die Befestigung des angetriebenen Lagerrades (5) an der Welle (4) in Längsachsenrichtung (L) mittels eines an der Welle (4) lösbar befestigten Klemmringes (17) und durch den in der Lageraufnahme (10) angeordneten Lagerbock (7) erfolgt.

8. Vorrichtung nach einem der vorhergehenden Ansprüche,
**dadurch gekennzeichnet, dass** der Lagerbock (7) einen Lagersitz (11) zur Anordnung an der Lageraufnahme (10) und einen mit dem Lagersitz (11) lösbar verbundenen Ständer (14) aufweist, der an einem Bauteil (8) der Vorrichtung (8) montiert ist und den Lagersitz (11) mit der Welle (4) insbesondere quer zur Längsachsenrichtung (L) abstützt.

9. Vorrichtung nach einem der vorhergehenden Ansprüche,
**dadurch gekennzeichnet, dass** die Vorrichtung zur Behandlung der Behälter eine Behälterreinigungsmaschine, insbesondere eine Flaschenreinigungsmaschine, ist.

10. Vorrichtung nach einem der vorhergehenden Ansprüche,
**dadurch gekennzeichnet, dass** die Kontaktfläche (13) des Lagerbocks (7) und die Anlagefläche (12) des Lagerrades (5) in der Art eines Gleitlagers betreibbar sind, wobei die Kontaktfläche (13) und Anlagefläche (12) als Gleitflächen ausgebildet sind.

11. Vorrichtung nach einem der vorhergehenden Ansprüche 1 bis 9,
**dadurch gekennzeichnet, dass** der Lagersitz (11) ein Wälz- oder Kugellager (11c) umfasst, an welchem es befestigt ist, wobei das Wälz- oder Kugellager (11c) in der Lageraufnahme (10) des Lagerrades (5) mindestens teilweise aufgenommen ist.

12. Verfahren zum Austauschen von Lagerstellen an Behälterbehandlungsvorrichtungen mit einer Vielzahl paralleler Zulaufbänder (3), auf welchen Behälter stehend gefördert werden und die einen gemeinsamen Antrieb der Zulaufbänder (3) aufweisen, der eine Welle (4) und einen die Welle (4) antreibenden Motor umfasst, wobei jedes Zulaufband (3) von mindestens einem Treibrad angetrieben wird, dass formschlüssig mit der Welle (4) verbunden ist und von dieser angetrieben wird, mit den Schritten:
- Demontage mindestens eines der Zulaufbänder (3),
- Lösen eines Befestigungsmittels (15) zum Verbinden einzelner Teile (5a) eines angetriebenen Lagerrades (5),
- Entnahme mindestens eines ersten Teils (5a) und eines zweiten Teils (5a) des angetriebenen Lagerrades (5),
- Aufsetzen eines ersten Teils (5) eines neuen angetriebenen Lagerrades (5) auf die Welle (4) und auf einen Lagerbock (7),
- Aufsetzen eines zweiten Teils (5a) des neuen angetriebenen Lagerrades (5) auf die Welle (4) und auf den Lagerbock (7),
- Verbinden der beiden Teile (5a) des neuen Lagerrades (5) durch Befestigen der Befestigungsmittel (15).

13. Verfahren nach Anspruch 12,
**dadurch gekennzeichnet, dass** der Lagerbock (7) einen Lagersitz (11) zur Anordnung an der Lageraufnahme (10) und einen mit dem Lagersitz (11) lösbar verbundenen Ständer (12) aufweist, der an einem Bauteil (8) der Vorrichtung (1) montiert ist, wobei vor dem Aufsetzen des ersten Teils (5a) des angetriebenen Lagerrades (5) zumindest der Lagersitz (11) ausgewechselt wird.

14. Verfahren nach Anspruch 12 oder 13,
**dadurch gekennzeichnet, dass** der Lagersitz (11) durch ein Lösen von Befestigungsmitteln (21) in mehrere Teile (11a) zerlegt wird.

## Claims

1. Device for handling containers comprising
- a supply region (2) having a plurality of parallel supply conveyors (3), on which containers are conveyed in an upright position,
- a common drive for the supply conveyors (3), having a shaft (4) and a motor driving the shaft (4), wherein each supply conveyor (3) is driven by at least one drive wheel which is interlockingly connected (in positive fit) to the shaft (4) and driven by same,
- at least one mounting point (6) configured for mounting the shaft (4), which has a driven bearing wheel (5) with a shaft receiving means (9) and bearing receiving means (10),
**characterised in that**
- a bearing block (7) provided in order to support the shaft (4) is provided with a bearing seat (11), comprising a contact surface (13), on which the bearing wheel (5) is rotatably mounted, inasmuch as
- a contact surface (12) of the bearing receiving means (10) is rotatably mounted on the contact surface (13), and
- the driven bearing wheel (5) is configured as a divided bearing wheel (5) that can be disassembled into at least two parts (5a).

2. Device according to claim 1,
**characterised in that** the divided bearing wheel (5) is a divided bearing wheel (5) which can be disassembled into at least three parts (5a).

3. Device according to claim 1 or 2,
**characterised in that** one of the contact surface (12) and contact surface (13) is formed from plastic, and the other of the contact surface (12) and contact surface (13) is formed from metal.

4. Device according to any one of the preceding claims,
**characterised in that** the bearing wheel (5) and the contact surface (12) are configured as being of one piece.

5. Device according to any one of the preceding claims,
**characterised in that** the bearing receiving means (10) is configured as a blind hole which extends in a longitudinal axial direction (L) of the shaft (4).

6. Device according to any one of the preceding claims,
**characterised in that** the shaft receiving means (9) and the bearing means (10) are arranged next to one another in the axial direction of the bearing wheel (5).

7. Device according to any one of the preceding claims,
**characterised in that** the securing of the driven bearing wheel (5) to the shaft (4) in the longitudinal axial direction (L) is effected by means of a clamping ring (17) detachably secured to the shaft (4) and by means of a bearing block (7) arranged in the bearing receiving means (10).

8. Device according to any one of the preceding claims,
**characterised in that** the bearing block (7) comprises a bearing seat (11) for arrangement on the bearing receiving means (10) and a stand (14) detachably connected to the bearing seat (11), which is mounted on a component part (8) of the device (8), and supports the bearing seat (11) with the shaft (4), in particular transversely to the longitudinal axial direction (L).

9. Device according to any one of the preceding claims,
**characterised in that** the device for handing the containers is a container cleaning machine, in particular a bottle cleaning machine.

10. Device according to any one of the preceding claims,
**characterised in that** the contact surface (13) of the bearing block (7) and the contact surface (12) of the bearing wheel (5) can be driven in the manner of a slide bearing, wherein the contact surface (13) and contact surface (12) are configured as slide surfaces.

11. Device according to any one of the preceding claims 1 to 9, **characterised in that** the bearing seat (11) comprises a roller bearing or ball bearing (11c), to which it is secured, wherein the roller bearing or ball bearing (11c) is at least partially received in the bearing receiving means (10) of the bearing wheel (5).

12. Method for exchanging mounting points on container-handling devices, having a plurality of parallel supply conveyors (3), on which containers are conveyed in an upright position, and which comprise a common drive for the supply conveyors (3), which in turn comprises a shaft (4) and a motor driving the shaft (4), wherein each supply conveyor (3) is driven by at least one drive wheel, this drive wheel being interlockingly connected (in positive fit) with the shaft (4) and is driven by it, with the steps:
- disassembly of at least one of the supply conveyors (3),
- release of a securing means (15) for connecting individual parts (5a) of a driven bearing wheel (5),
- removal of at least one first part (5a) and a second part (5a) of the driven bearing wheel (5),
- placing of a first part (5) of a new driven bearing wheel (5) onto the shaft (4) and onto a bearing block (7),
- placing of a second part (5a) of a new driven bearing wheel (5) onto the shaft (4) and onto a bearing block (7),
- connecting the two parts (5a) of the new bearing wheel (5) for securing the securing means (15).

13. Method according to claim 12,
**characterised in that** the bearing block (7) comprises a bearing seat (11) for arrangement on the bearing receiving means (10), and a stand (12) detachably connected to the bearing seat (11), which is mounted on a component part (8) of the device (1), wherein, before the first part (5a) of the driven bearing wheel (5) is put in place, at least the bearing seat (11) is replaced.

14. Method according to claim 12 or 13,
**characterised in that** the bearing seat (11) is disassembled by releasing securing means (21) into several parts (11a).

## Revendications

1. Dispositif de traitement de contenants, présentant
- une zone d'amenée (2) avec une pluralité de bandes d'alimentation (3) parallèles, sur lesquelles des contenants sont transportés en position debout,
- un entraînement commun des bandes d'alimentation (3), qui comprend un arbre (4) et un moteur entraînant l'arbre (4), dans lequel chaque bande d'alimentation (3) est entraînée par au moins une roue motrice, qui est assemblée par complémentarité de forme à l'arbre (4) et est entraînée par celui-ci,
- au moins un emplacement de montage (6) réalisé pour monter l'arbre (4), qui présente une roue de palier (5) entraînée avec un logement d'arbre (9) et un logement de palier (10),
**caractérisé en ce que**
- un support de palier (7) prévu pour soutenir l'arbre (4) est prévu avec un siège de palier (11) comprenant une surface de contact (13), sur laquelle la roue de palier (5) est montée de manière mobile en rotation **en ce que**
- une surface d'appui (12) du logement de palier (10) est montée de manière mobile en rotation sur la surface de contact (13), et
- la roue de palier (5) entraînée est réalisée en tant qu'une roue de palier (5) divisée pouvant être démontée en au moins deux parties (5a).

2. Dispositif selon la revendication 1,
**caractérisé en ce que** la roue de palier (5) divisée est une roue de palier (5) divisée pouvant être démontée en au moins trois parties (5a).

3. Dispositif selon la revendication 1 ou la revendication 2,
**caractérisé en ce qu'**une de la surface d'appui (12) et de la surface de contact (13) est réalisée en matière plastique et l'autre de la surface d'appui (12) et de la surface de contact (13) est réalisée en métal.

4. Dispositif selon l'une quelconque des revendications précédentes, **caractérisé en ce que** la roue de palier (5) et la surface d'appui (12) sont réalisées en une partie.

5. Dispositif selon l'une quelconque des revendications précédentes,
**caractérisé en ce que** le logement de palier (10) est réalisé en tant qu'un trou borgne s'étendant dans une direction d'axe longitudinal (L) de l'arbre (4).

6. Dispositif selon l'une quelconque des revendications précédentes, **caractérisé en ce que** le logement d'arbre (9) et le logement de palier (10) sont disposés côte à côte dans une direction axiale de la roue de palier (5).

7. Dispositif selon l'une quelconque des revendications précédentes, **caractérisé en ce que** la fixation de la roue de palier (5) entraînée sur l'arbre (4) est effectuée dans la direction d'axe longitudinal (L) au moyen d'une bague de serrage (17) fixée de manière amovible sur l'arbre (4) et par le support de palier (7) disposé dans le logement de palier (10).

8. Dispositif selon l'une quelconque des revendications précédentes, **caractérisé en ce que** le support de palier (7) présente un siège de palier (11) destiné à être disposé sur le logement de palier (10) et un montant (14) assemblé de manière amovible au siège de palier (11), qui est monté sur un composant (8) du dispositif (1) et soutient le siège de palier (11) avec l'arbre (4) en particulier de manière transversale par rapport à la direction d'axe longitudinal (L).

9. Dispositif selon l'une quelconque des revendications précédentes, **caractérisé en ce que** le dispositif de traitement des contenants est une machine de nettoyage de contenants, en particulier une machine de nettoyage de bouteilles.

10. Dispositif selon l'une quelconque des revendications précédentes, **caractérisé en ce que** la surface de contact (13) du support de palier (7) et la surface d'appui (12) de la roue de palier (5) peuvent fonctionner à la manière d'un palier de glissement, dans lequel la surface de contact (13) et la surface d'appui (12) sont réalisées en tant que surfaces de glissement.

11. Dispositif selon l'une quelconque des revendications 1 à 9, **caractérisé en ce que** le siège de palier (11) comprend un palier de roulement ou à billes (11c), sur lequel il est fixé, dans lequel le palier de roulement ou à billes (11c) est logé au moins en partie dans le logement de palier (10) de la roue de palier (5).

12. Procédé pour échanger des emplacements de montage sur des dispositifs de traitement de contenant avec une pluralité de bandes d'alimentation (3) parallèles, sur lesquelles des contenants sont transportés en position debout et qui présentent un entraînement commun des bandes d'alimentation (3) qui comprend un arbre (4) et un moteur entraînant l'arbre (4), dans lequel chaque bande d'alimentation (3) est entraînée par au moins une roue motrice, qui est assemblée par complémentarité de forme à l'arbre (4) et est entraînée par celui-ci, avec les étapes :
- de démontage d'au moins une des bandes d'alimentation (3),
- de desserrage d'un moyen de fixation (15) pour assembler diverses parties (5a) d'une roue de palier (5) entraînée,
- de retrait d'au moins une première partie (5a) et d'une deuxième partie (5a) de la roue de palier (5) entraînée,
- de placement d'une première partie (5) d'une nouvelle roue de palier (5) entraînée sur l'arbre (4) et sur un support de palier (7),
- de placement d'une deuxième partie (5a) de la nouvelle roue de palier (5) entraînée sur l'arbre (4) et le support de palier (7),
- d'assemblage des deux parties (5a) de la nouvelle roue de palier (5) par fixation des moyens de fixation (15).

13. Procédé selon la revendication 12,
**caractérisé en ce que** le support de palier (7) présente un siège de palier (11) destiné à être disposé sur le logement de palier (10) et un montant (12) assemblé de manière amovible au siège de palier (11), qui est monté sur un composant (8) du dispositif (1), dans lequel au moins le siège de palier (11) est remplacé avant le placement de la première partie (5a) de la roue de palier (5) entraînée.

14. Procédé selon la revendication 12 ou 13,
**caractérisé en ce que** le siège de palier (11) est démonté en plusieurs parties (11a) par un desserrage de moyens de fixation (21).
